# EUROPEAN PATENT APPLICATION

(11) **EP 3 327 826 A1**
(43) Date of publication of application: **30.05.2018**
(21) Application number: 16201160.5
(22) Date of filing: 29.11.2016
(51) Int. Cl.: H01M 2/20, H01M 2/34, H01M 10/42, H01M 10/637

(54) **A BUS BAR FOR THE ELECTRICAL CONNECTION OF AT LEAST TWO TERMINALS OF A BATTERY SYSTEM AND A CORRESPONDING BATTERY SYSTEM**

(71) Applicant: Samsung SDI Co., Ltd., Giheung-gu Yongin-si, Gyeonggi-do 17084 (KR)
(72) Inventor: ERHART, Michael, 8054 Seiersberg (AT); HOFER, Maximilian, 8230 Hartberg (AT)
(74) Representative: Gulde & Partner

(57) **Abstract**

The present invention refers to a bus bar (100) for the electrical connection of at least two terminals of a battery system (200). The bus bar (100) comprises a first and second electrically conductive terminal portion (91, 92), being spatially separated from each other and connectable to a terminal of a battery system (200) respectively. Moreover, the bus bar (100) comprises a semiconductor switch (60) being adapted to electrically connect the first and the second electrically conductive terminal portion (91, 92) with each other. The semiconductor switch (60) is directly mounted on the first and the second electrically conductive terminal portion (91, 92) and/or at least in part surrounded by the first and/or the second electrically conductive terminal portion (91, 92) respectively.

Moreover, a corresponding battery system (200) with a bus bar (100) according to the invention is provided.

## Description

### Field of the Invention

The present invention relates to a bus bar for the electrical connection of at least two terminals of a battery system. The bus bar comprises a first and a second electrically conductive terminal portion, being spatially separated from each other and connectable to a terminal of a battery system respectively. Furthermore, the bus bar comprises a semiconductor switch comprising at least one semiconductor switching element, the semiconductor switch being adapted to electrically connect the first and the second electrically conductive terminal portion with each other. Moreover, the present invention relates to a battery system with a bus bar according to the invention.

### Technological Background

A rechargeable or secondary battery system differs from a primary battery system in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In some battery systems of the state of the art - especially in 48V batteries - an electromechanical switch is used to control the voltage level of the power interface of the battery system. Additionally, a fuse often comes to use to provide for safety functionalities. Both components have to be selected or designed in a way to assure a so called switch-off strategy which supports to achieve the safe-state of a battery system. Below a predefined threshold of a battery system current, the electromechanical switch can cut-off the flow of the current. Above this predefined threshold of the battery system current, the fuse will interrupt the flow of the battery system current, for example from the battery system to a load connected to the battery system, and thus prevent the delivery of power. Thus, when the battery system current surpasses a predefined level, it will be cut-off via either the electromechanical switch or via the fuse for safety reasons.

Both components, the fuse and the electromechanical switch, can be located within the battery system or on a vehicle level in a fuse- or control box.

However, both components are expensive, increase the overall power dissipation of the battery system to an inacceptable degree, are slow, and have impractical dimensions respectively.

### Summary of Invention

One or more of the drawbacks of the prior art could be avoided or at least reduced by means of the present invention. In particular, a bus bar for the electrical connection of at least two terminals of a battery system is provided. The bus bar comprises a first and a second electrically conductive terminal portion, being spatially separated from each other and connectable to a terminal of a battery system respectively. Moreover, the bus bar comprises a semiconductor switch comprising at least one semiconductor switching element, the semiconductor switch being adapted to electrically connect the first and the second electrically conductive terminal portion with each other. The semiconductor switch is directly mounted on the first and the second electrically conductive terminal portion and/or at least in part surrounded by the first and/or the second electrically conductive terminal portion respectively.

In such an embodiment, the aforementioned electromechanical switch and the fuse are replaced with a semiconductor switch that is integrated within a bus bar of the battery system. Such a bus bar can be used to efficiently, reliably and quickly electrically separate a battery system from a load connected to the battery system.

Preferably, the at least two terminals of the battery system which can be electrically connected via the bus bar according to the invention comprise a terminal of a first battery cell and a terminal of a second battery cell of the battery system. Furthermore preferred, the at least two terminals of the battery system comprise a terminal of a battery cell and an external terminal of the battery system and/or a terminal that is connectable to an external load.

Preferably, the semiconductor switch is adapted to provide for an electrically conductive path between the first and the second electrically conductive terminal portion upon an actuation of the semiconductor switch. Furthermore preferred, the semiconductor switch is adapted to interrupt an electrically conductive path between the first and the second electrically conductive terminal portion upon an actuation of the semiconductor switch.

Preferably, the semiconductor switch comprises at least two semiconductor switching elements electrically connected with each other, wherein a first of the semiconductor switching elements is at least in part surrounded by the first electrically conductive terminal portion and/or wherein the second of the semiconductor switching elements is at least in part surrounded by the second electrically conductive terminal portion. In such an embodiment, the bus bar can easily be manufactured and is more compact, allowing for a reduction of the space taken by the battery system within for example a vehicle or in general within a housing of the battery system.

In a preferred embodiment, the semiconductor switch comprises at least two semiconductor switching elements electrically connected with each other, wherein a first of the semiconductor switching elements is directly mounted on the first electrically conductive terminal portion and/or wherein the second of the semiconductor switching elements is directly mounted on the second electrically conductive terminal portion.

Preferably, the first and/or second electrically conductive terminal portion comprises a connection hole and/or a fixation hole for the reception of a terminal of a battery system, especially of a terminal of a battery cell or of a battery module of the battery system. Furthermore preferred, the connection hole and/or a fixation hole allows for an electrical connection between the electrically conductive terminal portion of the bus bar and the respective terminal of the battery system respectively.

Preferably, the at least two semiconductor switching elements are realized as Field Effect Transistors (FETs) respectively. Field effect transistors, or FETs, allow for a fast switching of currents and provide for decreased power dissipation.

In a preferred embodiment, the at least two semiconductor switching elements are realized as Power-MOSFETs respectively. Power-MOSFETs allow for the reliable switching of high currents while they simultaneously can be realized in small dimensions.

Preferably, the Source-Terminals of the at least two semiconductor switching elements are electrically connected to each other. In such an embodiment, the at least two semiconductor switching elements are connected in series such that the same current flows through all of the at least two semiconductor switching elements. Furthermore, in such an embodiment, the flow of a current of a battery system can be switched via every single one of the semiconductor switching elements respectively, allowing for an ameliorated control of the current provided by the battery system.

In a preferred embodiment, the Drain-Terminal of the first of the semiconductor switching elements is electrically connected to the first electrically conductive terminal portion and the Drain-Terminal of the second of the semiconductor switching elements is electrically connected to the second electrically conductive terminal portion. In such an embodiment, the semiconductor switching elements advantageously allow for an electrical interconnection of the first and the second electrically conductive terminal portions. Preferably, the Drain-Terminal of the first of the semiconductor switching elements is directly mounted on the first electrically conductive terminal portion and/or the Drain-Terminal of the second of the semiconductor switching elements is directly mounted on the second electrically conductive terminal portion. In such an embodiment, the manufacturing of the bus bar can easily and quickly be performed, for example in an automated process.

In a preferred embodiment, the Gate-Terminals of the at least two semiconductor switching elements are electrically connected to each other. In such an embodiment, the semiconductor switch can be transferred into a conductive state via a single signal, allowing for an eased switching of the current that can be provided by a battery system.

Preferably, the at least two semiconductor switching elements are provided on a bare semiconductor die without a packaging or as a packaged device respectively. In comparison to an embodiment in which packaged semiconductor switching elements based on the same silicon come to use, bare dies provide for a decreased value of the resistance of the Drain-Source path R_{ON} of the two semiconductor switching elements in an on-state respectively. Thus, the ON-STATE resistance R_{ON} of the two semiconductor switching elements is reduced respectively.

In a preferred embodiment, the at least two semiconductor switching elements are soldered to their respective electrically conductive terminal portion. In such an embodiment, a manufacturing of a compact bus bar is eased and can be performed in an automated process.

Furthermore, a battery system is provided, the battery system comprises at least one battery cell, a bus bar that is according to the invention and an electronic circuit board, comprising at least one electronic circuit of the battery system, wherein the bus bar is physically connected to the electronic circuit board. In such an embodiment, the battery system is compact and the semiconductor switch of the bus bar can be directly connected to the electronic circuit board, especially to the at least one electronic circuit of the battery system.

Preferably, the electronic circuit board comprises a printed circuit board. Printed circuit boards can efficiently and quickly be manufactured.

In a preferred embodiment, the first and the second electrically conductive terminal portions are soldered to the electronic circuit board respectively. In such an embodiment, the manufacturing of the battery system is cost-efficient and can easily be performed, for example in an automated process.

Furthermore preferred, the Source-Terminals of the at least two semiconductor switching elements and/or the Gate-Terminals of the at least two semiconductor switching elements are electrically connected to the electronic circuit board. In such an embodiment, the semiconductor switch can be controlled via the electronic circuit board which for example can be connected to a battery management system or circuit.

Preferably, the electrical connections of the Source-Terminals of the at least two semiconductor switching elements and/or of the Gate-Terminals of the at least two semiconductor switching elements to the electronic circuit board are realized via bonding wires. Bonding wires are cheap and provide for a stable electrical connection between the aforementioned terminals of the semiconductor switching elements and the electronic circuit board. Expressed in other words, preferably the electrical connections of the Source-Terminals of the at least two semiconductor switching elements to the electronic circuit board are realized via bonding wires. Furthermore preferred, the electrical connections of the Gate-Terminals of the at least two semiconductor switching elements to the electronic circuit board are realized via bonding wires.

According to another aspect of the present invention, a vehicle including a battery module as defined above is provided.

Further aspects of the present invention could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic cross-sectional view and a magnified view of a battery system according to a first embodiment of the invention;
- Fig. 2: illustrates a perspective view of the first embodiment of the battery system as shown in figure 1;
- Fig. 3a: illustrates the electronic circuit of a first part of the first embodiment of a bus bar as shown in figure 1 and 2;
- Fig. 3b: illustrates the electronic circuit of the first embodiment of a bus bar as shown in figure 1 and 2;
- Fig. 4: illustrates a schematic cross-sectional view of a battery system according to a second embodiment of the invention; and
- Fig. 5: illustrates a schematic cross-sectional view and a top view of a battery system according to a third embodiment of the invention.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention."

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention.

In the following description of embodiments of the present invention, the terms of a singular form may include plural forms unless the context clearly indicates otherwise.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a region or an element is referred to as being "above" or "on" another region or element, it can be directly on the other region or element, or intervening regions or elements may also be present.

In the drawings, the sizes of elements may be exaggerated for clarity. For example, in the drawings, the size or thickness of each element may be arbitrarily shown for illustrative purposes, and thus the embodiments of the present invention should not be construed as being limited thereto.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g. rotated 90 degrees or at other orientations) and the spatially relative descriptors used herein should be interpreted accordingly.

It will be understood that when an element is referred to as being "on," "connected to," or "coupled to" another element, it can be directly on, connected to, or coupled to the other element, or one or more intervening elements may be present. In addition, it will also be understood that when an element is referred to as being "between" two elements, it can be the only element between the two elements, or one or more intervening elements may also be present.

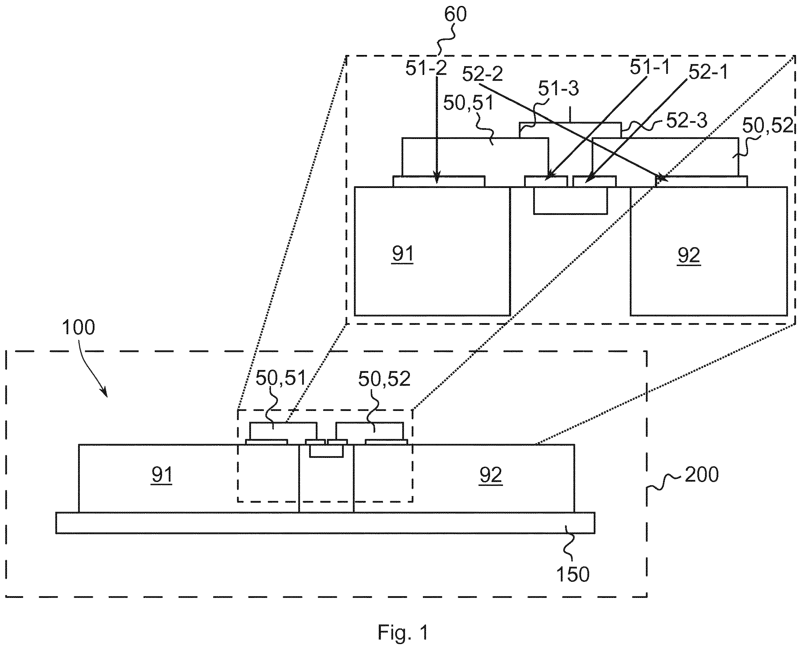

Figure 1 illustrates a schematic cross-sectional view and a magnified view of a battery system 200 according to a first embodiment of the invention. In more detail, only a fraction of a battery system 200 that is according to the invention is shown in the bottom of figure 1, while a magnified excerpt of this fraction is shown above of the same.

In this first embodiment, the battery system 200 comprises a plurality of series connected battery cells which for the sake of a better understanding of the invention are not shown in figure 1. In other embodiments, the battery cells of a battery system that is according to the invention can also be connected in parallel to each other or in parallel and in series to each other. Moreover, the battery system 200 comprises an electronic circuit board 150 which in this first embodiment exemplarily is realized as a printed circuit board and of which only a fraction is shown in figure 1. The printed circuit board comprises battery system electronics, for example electronic circuits, which are allocated to a battery cell of the battery system respectively and which may be used for battery cell supervision or the like. The battery system 200 in this embodiment further comprises two battery system terminals (not shown), which allow to electrically connect the plurality of series connected battery cells of the battery system 200 with a load that shall be powered with the battery system 200. Via a first embodiment of a bus bar 100 comprised by the battery system 200, a terminal of a battery cell (not shown) of the battery system 200 is electrically connected to one of the aforementioned battery system terminals.

The bus bar 100 is physically connected to the electronic circuit board 150. The bus bar 100 comprises a first and a second electrically conductive terminal portion 91, 92 which in this first embodiment are exemplarily realized as copper plates respectively, the copper plates being soldered onto the printed circuit board with a gap being arranged in between them. Expressed in other words, the first and the second electrically conductive terminal portion 91, 92 are fixed to the printed circuit board, being spatially separated from one another. The first and the second electrically conductive terminal portions 91, 92 in this first embodiment each comprise a connection hole for the aforementioned terminals (for the terminal of the battery cell of the battery system 200 and for the battery system terminal) to be inserted therein. Even though in this embodiment, the first and the second electrically conductive terminal portions 91, 92 comprise copper and are soldered to the Printed Circuit Board respectively, they also can comprise any other electrically conductive material and be fixed to the electronic circuit board 150 in another manner, using another fixation method. Furthermore, the first and the second electrically conductive terminal portions 91, 92 can be configured connectable to the aforementioned terminals or to other terminals via other connection portions which are not limited to connection holes.

The bus bar 100 further comprises a semiconductor switch 60 that comprises four semiconductor switching elements 50, the semiconductor switch 60 being adapted to electrically connect the first and the second electrically conductive terminal portion 91, 92 with each other. The four semiconductor switching elements 50 in this first embodiment are exemplarily realized as packaged Power-MOSFETs respectively, of which in figure 1 only two are visible from the side. In this first embodiment, also the semiconductor switch 60 is soldered to the first and the second electrically conductive terminal portion 91, 92 respectively. In more detail, a first and a third (not visible) of the four semiconductor switching elements 51 are directly soldered onto the first electrically conductive terminal portion 91 while the second and fourth (not visible) of the four semiconductor switching elements 52 are directly soldered onto the second electrically conductive terminal portion 92. However, instead of being soldered onto the bus bar 100/the first and the second electrically conductive terminal portions 91, 92, the aforementioned semiconductor switching elements 50, 51, 52 can also be fixed and/or mounted to the bus bar 100/the first and the second electrically conductive terminal portions 91, 92 using any other physical connection procedure or method.

In this first embodiment, the Source-Terminals 51-1, 52-1 of the four semiconductor switching elements 51, 52 are electrically connected to each other and to the printed circuit board, thus to the electronic circuit board 150. Furthermore, the Drain-Terminals 51-2 of the first and third (not visible) semiconductor switching elements 51 are electrically connected to the first electrically conductive terminal portion 91, wherein the Drain-Terminals 52-2 of the second and fourth (not visible) of the semiconductor switching elements 52 are electrically connected to the second electrically conductive terminal portion 92. Moreover, the Gate-Terminals 51-3, 52-3 of the four semiconductor switching elements 51, 52 are electrically connected to each other and to the printed circuit board, thus to the electronic circuit board 150.

In other, alternative embodiments, only the Source-Terminals 51-1, 52-1 and the Gate-Terminals 51-3, 52-3 of opposing pairs of the four semiconductor switching elements 51, 52 can be electrically connected with each other respectively. For example, the Source-Terminals 51-1, 52-1 and Gate-Terminals 51-3, 52-3 of the first and second semiconductor switching elements 51, 52 and of the third and fourth semiconductor switching elements can be connected with each other respectively. In such an alternative embodiment, the Source-Terminals 51-1, 52-1 of the first and second semiconductor switching elements 51, 52 are electrically connected to each other and to the printed circuit board. Furthermore, the Source-Terminals of the third and fourth semiconductor switching elements are electrically connected to each other and to the printed circuit board, thus to the electronic circuit board 150. The same applies for the respective Gate-Terminals of the four semiconductor switching elements.

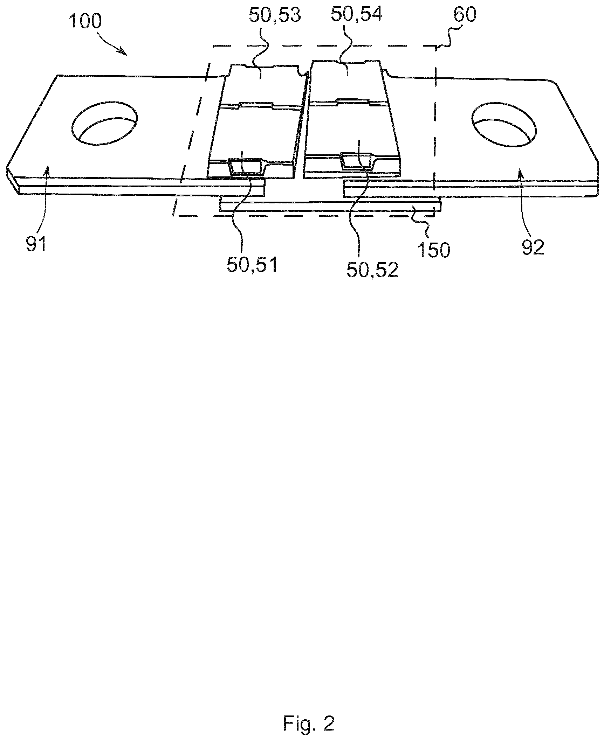

In figure 2, a perspective view of the first embodiment of the bus bar 100 as shown in figure 1 is illustrated. Furthermore, also the third and fourth switching elements 53, 54 are shown. Moreover, also the drilled steering cables for the control of the Power-MOSFETs are illustrated, the drilled steering cables being connected to the Gate-Terminals of the Power-MOSFETs.

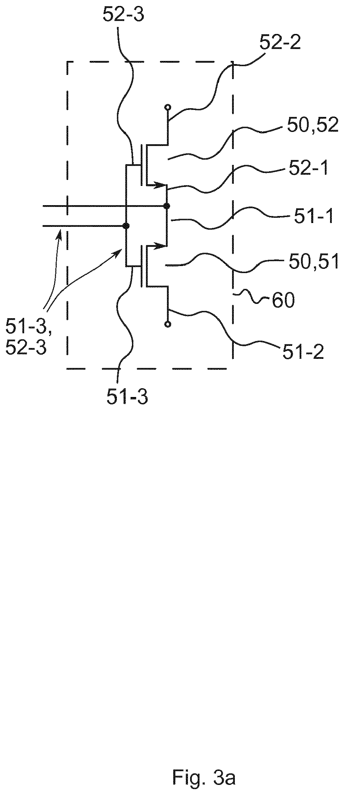

In figure 3a, the electronic circuit of a first part of the semiconductor switch 60 of the first embodiment of a bus bar 100 as shown in figure 1 and 2 is illustrated. In more detail, the circuit diagram of the first and second semiconductor switching elements 51, 52 of the semiconductor switch 60 of the first embodiment of a bus bar 100 as shown in figures 1 and 2 is illustrated in figure 3a, wherein the third and fourth semiconductor switching elements are neglected.

In another embodiment of a bus bar that is according to the invention, the semiconductor switch of this bus bar may only comprise the first and second semiconductor switching elements 51, 52 as shown in figure 1 and 2, which are connected to each other as shown in figure 3a.

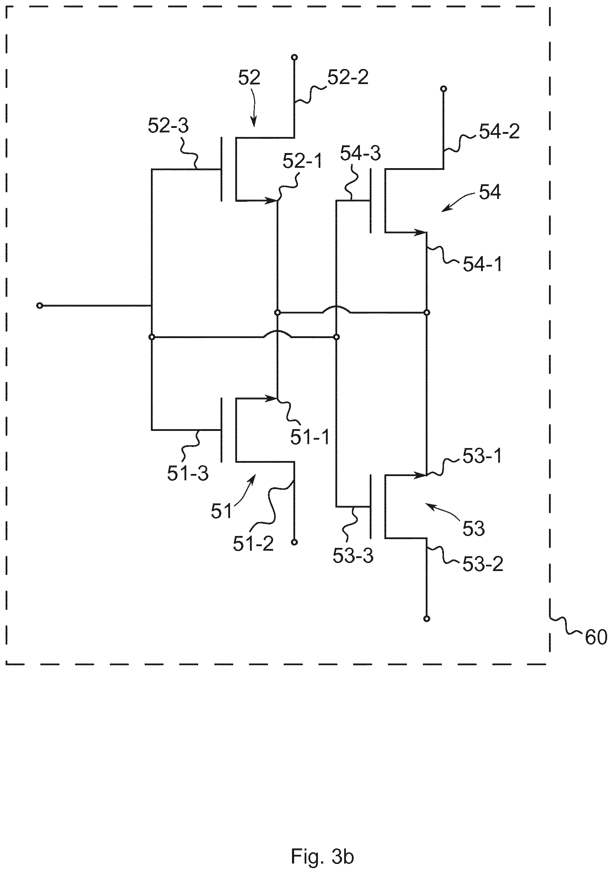

In figure 3b, the electronic circuit of the first embodiment of a bus bar 100 as shown in figure 1 and 2 is illustrated. In more detail, the circuit diagram of the first, second, third and fourth semiconductor switching elements 51, 52, 53, 54 of the semiconductor switch 60 of the first embodiment of a bus bar 100 as shown in figure 2 is illustrated in figure 3b.

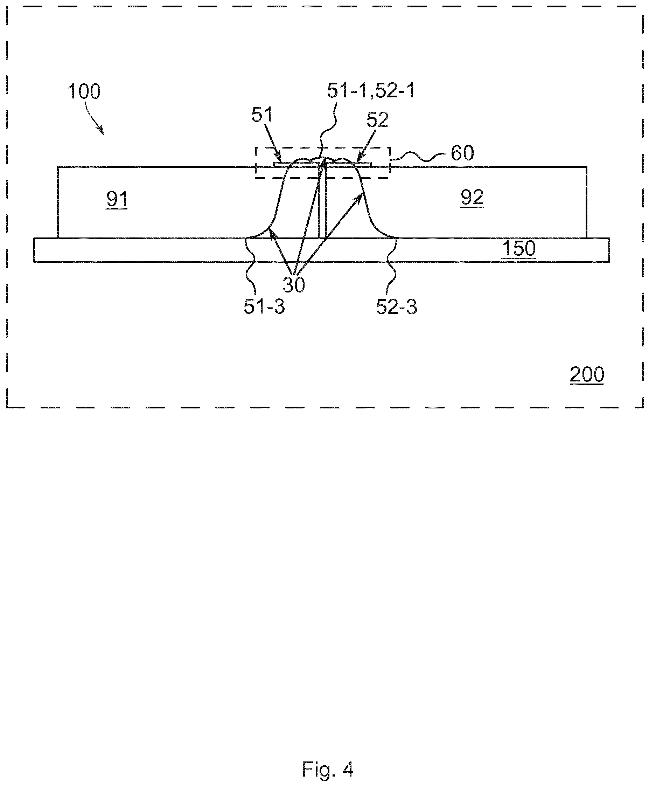

In figure 4, a schematic cross-sectional view of a battery system 200 according to a second embodiment of the invention is shown. Again, only a fraction of the electronic circuit board 150 of the battery system 200 with a second embodiment of a bus bar 100 thereon is illustrated in figure 4. The rest of the battery system 200 is omitted for the sake of a better understanding. Also in this second embodiment, the bus bar 100 comprises a semiconductor switch 60 which comprises a first and a second semiconductor switching element 51, 52 that are mounted directly onto the first and the second electrically conductive terminal portions 91, 92 respectively. However, in this embodiment, the two semiconductor switching elements 51, 52 are provided on a bare semiconductor die without a packaging respectively. In contrary to that, the semiconductor switching elements 51, 52 shown in figure 2 comprise a packaging respectively. In this second embodiment, the electrical connections of the Source-Terminals 51-1, 52-1 of the two semiconductor switching elements 51, 52 with each other and to the electronic circuit board 150 respectively and of the Gate-Terminals 51-3, 52-3 of the two semiconductor switching elements 51, 52 with each other and to the electronic circuit board 150 respectively are realized via bonding wires 30. Expressed in other words, the aforementioned Source-Terminals 51-1, 52-1 are connected to each other via bonding wires 30 and to the electronic circuit board 150 via bonding wires 30. Furthermore, also the aforementioned Gate-Terminals 51-3, 52-3 are connected to each other via bonding wires 30 and to the electronic circuit board 150 via bonding wires 30.

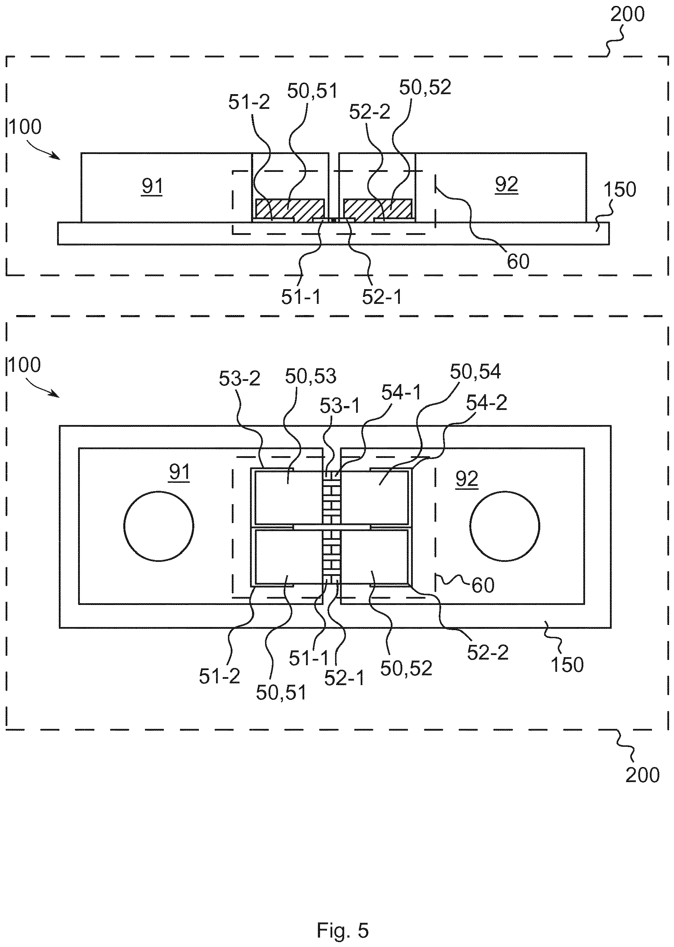

Figure 5 illustrates a schematic cross-sectional view and a top view of a battery system 200 according to a third embodiment of the invention. In more detail, in figure 5, a cross-sectional view of the battery system 200 is shown above a top view of the same. Also in figure 5, only a fraction of the electronic circuit board 150 of the battery system 200 with a third embodiment of a bus bar 100 is illustrated for the sake of a better understanding.

In this third embodiment, the semiconductor switch 60 of the bus bar 100 is in part surrounded by the first and the second electrically conductive terminal portion 91, 92 respectively. Again, the semiconductor switch 60 exemplarily comprises four semiconductor switching elements 51, 52, 53, 54 which are connected in the same manner as shown in figure 3b and as described hereinbefore. However, in this third embodiment of the bus bar 100, the first and third semiconductor switching elements 51, 53 are surrounded by the first electrically conductive terminal portion 91 respectively and the second and fourth semiconductor switching elements 52, 54 are surrounded by the second electrically conductive terminal portion 92 respectively. Expressed in other words, in this third embodiment, the first and the second electrically conductive terminal portions 91, 92 which are mounted on the electronic circuit board 150, each comprise two cavities for the four semiconductor switching elements 51, 52, 53, 54 respectively. Thus, the four semiconductor switching elements 51, 52, 53, 54 in this third embodiment are directly mounted, for example soldered, onto the electronic circuit board 150 within their respective cavity within the first and the second electrically conductive terminal portions 91, 92 respectively. Therefore, the Source-Terminals 51-1, 52-1, 53-1, 54-1 and the Drain-Terminals 51-2, 52-2, 53-2, 54-2 of the four semiconductor switching elements 51, 52, 53, 54 are directly provided on the electronic circuit board 150, which also in this third embodiment of the battery system 200 is realized as a printed circuit board.

It shall be noted that, as the view on the first and second semiconductor switching elements 51, 52 in figure 5 is actually blocked by the first and second electrically conductive terminal portions 91, 92, the respective areas of the first and second electrically conductive terminal portions 91, 92 blocking the view are illustrated as being transparent in figure 5, solely for the sake of a better understanding.

## Claims

1. A bus bar (100) for the electrical connection of at least two terminals of a battery system (200), the bus bar (100) comprising:
a first and a second electrically conductive terminal portion (91, 92), being spatially separated from each other and connectable to a terminal of a battery system (200) respectively;
a semiconductor switch (60) comprising at least one semiconductor switching element (50), the semiconductor switch (60) being adapted to electrically connect the first and the second electrically conductive terminal portion (91, 92) with each other;
**characterized in that**,
the semiconductor switch (60) is directly mounted on the first and the second electrically conductive terminal portion (91, 92) and/or at least in part surrounded by the first and/or the second electrically conductive terminal portion (91, 92) respectively.

2. The bus bar (100) of claim 1, wherein the semiconductor switch (60) comprises at least two semiconductor switching elements (51, 52) electrically connected with each other, wherein a first of the semiconductor switching elements (51) is at least in part surrounded by the first electrically conductive terminal portion (91 ) and/or wherein the second of the semiconductor switching elements (52) is at least in part surrounded by the second electrically conductive terminal portion (92).

3. The bus bar (100) of claim 1, wherein the semiconductor switch (60) comprises at least two semiconductor switching elements (51, 52) electrically connected with each other, wherein a first of the semiconductor switching elements (51) is directly mounted on the first electrically conductive terminal portion (91) and/or wherein the second of the semiconductor switching elements (52) is directly mounted on the second electrically conductive terminal portion (92).

4. The bus bar (100) of claim 2 or 3, wherein the at least two semiconductor switching elements (51, 52) are realized as Field Effect Transistors (FETs) respectively.

5. The bus bar (100) of claim 4, wherein the at least two semiconductor switching elements (51, 52) are realized as Power-MOSFETs respectively.

6. The bus bar (100) of claim 4 or 5, wherein the Source-Terminals (51-1, 52-1) of the at least two semiconductor switching elements (51, 52) are electrically connected to each other.

7. The bus bar (100) of any one of the claims 4 to 6, wherein the Drain-Terminal (51-2) of the first of the semiconductor switching elements (51) is electrically connected to the first electrically conductive terminal portion (91) and wherein the Drain-Terminal (52-2) of the second of the semiconductor switching elements (52) is electrically connected to the second electrically conductive terminal portion (92).

8. The bus bar (100) of any one of the claims 4 to 7, wherein the Gate-Terminals (51-3, 52-3) of the at least two semiconductor switching elements (51, 52) are electrically connected to each other.

9. The bus (100) of any one of the claims 4 to 8, wherein the at least two semiconductor switching elements (51, 52) are provided on a bare semiconductor die without a packaging or as a packaged device respectively.

10. The bus bar (100) of claim 3 and any one of the claims 4 to 9, wherein the at least two semiconductor switching elements (51, 52) are soldered to their respective electrically conductive terminal portion (91, 92).

11. A battery system (200), comprising:
at least one battery cell;
a bus bar (100) according to any one of the claims 1 to 10;
an electronic circuit board (150), comprising at least one electronic circuit of the battery system (200), wherein the bus bar (100) is physically connected to the electronic circuit board (150).

12. The battery system (200) of claim 11, wherein the electronic circuit board (150) comprises a printed circuit board.

13. The battery system (200) of claim 11 or 12, wherein the first and the second electrically conductive terminal portions (91, 92) are soldered to the electronic circuit board (150) respectively.

14. The battery system (200) of any one of the claims 11 to 13 with a bus bar (100) according to any one of the claims 4 to 10, wherein the Source-Terminals (51-1, 52-1) of the at least two semiconductor switching elements (51, 52) and/or the Gate-Terminals (51-3, 52-3) of the at least two semiconductor switching elements (51, 52) are electrically connected to the electronic circuit board (150).

15. The battery system (200) of claim 14, wherein the electrical connections of the Source-Terminals (51-1, 52-1) of the at least two semiconductor switching elements (51, 52) and/or of the Gate-Terminals (51-3, 52-3) of the at least two semiconductor switching elements (51, 52) to the electronic circuit board (150) are realized via bonding wires (30).

## Amended claims

### Amended claims in accordance with Rule 137(2) EPC.

1. A bus bar (100) for the electrical connection of at least two terminals of a battery system (200), the bus bar (100) comprising:
a first and a second electrically conductive terminal portion (91, 92), being spatially separated from each other and connectable to a terminal of a battery system (200) respectively;
a semiconductor switch (60) comprising a first and a second semiconductor switching element (51, 52), the semiconductor switch (60) being adapted to electrically connect the first and the second electrically conductive terminal portion (91, 92) with each other;
wherein the semiconductor switch (60) is directly mounted on the first and the second electrically conductive terminal portion (91, 92) and/or at least in part surrounded by the first and/or the second electrically conductive terminal portion (91, 92) respectively,
**characterized in that**
the first semiconductor switching element (51) is solely mounted to the first electrically conductive terminal portion (91), wherein the second semiconductor switching element (52) is solely mounted to the second electrically conductive terminal portion (92), wherein the Source-Terminals (51-1, 52-1) of the first and the second semiconductor switching elements (51, 52) are directly electrically connected to each other.

2. The bus bar (100) of claim 1, wherein the semiconductor switch (60) comprises at least two semiconductor switching elements (51, 52) electrically connected with each other, wherein a first of the semiconductor switching elements (51) is at least in part surrounded by the first electrically conductive terminal portion (91) and/or wherein the second of the semiconductor switching elements (52) is at least in part surrounded by the second electrically conductive terminal portion (92).

3. The bus bar (100) of claim 1, wherein the semiconductor switch (60) comprises at least two semiconductor switching elements (51, 52) electrically connected with each other, wherein a first of the semiconductor switching elements (51) is directly mounted on the first electrically conductive terminal portion (91) and/or wherein the second of the semiconductor switching elements (52) is directly mounted on the second electrically conductive terminal portion (92).

4. The bus bar (100) of claim 2 or 3, wherein the at least two semiconductor switching elements (51, 52) are realized as Field Effect Transistors (FETs) respectively.

5. The bus bar (100) of claim 4, wherein the at least two semiconductor switching elements (51, 52) are realized as Power-MOSFETs respectively.

6. The bus bar (100) of claim 4 or 5, wherein the Source-Terminals (51-1, 52-1) of the at least two semiconductor switching elements (51, 52) are electrically connected to each other.

7. The bus bar (100) of any one of the claims 4 to 6, wherein the Drain-Terminal (51-2) of the first of the semiconductor switching elements (51) is electrically connected to the first electrically conductive terminal portion (91) and wherein the Drain-Terminal (52-2) of the second of the semiconductor switching elements (52) is electrically connected to the second electrically conductive terminal portion (92).

8. The bus bar (100) of any one of the claims 4 to 7, wherein the Gate-Terminals (51-3, 52-3) of the at least two semiconductor switching elements (51, 52) are electrically connected to each other.

9. The bus (100) of any one of the claims 4 to 8, wherein the at least two semiconductor switching elements (51, 52) are provided on a bare semiconductor die without a packaging or as a packaged device respectively.

10. The bus bar (100) of claim 3 and any one of the claims 4 to 9, wherein the at least two semiconductor switching elements (51, 52) are soldered to their respective electrically conductive terminal portion (91, 92).

11. A battery system (200), comprising:
at least one battery cell;
a bus bar (100) according to any one of the claims 1 to 10;
an electronic circuit board (150), comprising at least one electronic circuit of the battery system (200), wherein the bus bar (100) is physically connected to the electronic circuit board (150).

12. The battery system (200) of claim 11, wherein the electronic circuit board (150) comprises a printed circuit board.

13. The battery system (200) of claim 11 or 12, wherein the first and the second electrically conductive terminal portions (91, 92) are soldered to the electronic circuit board (150) respectively.

14. The battery system (200) of any one of the claims 11 to 13 with a bus bar (100) according to any one of the claims 4 to 10, wherein the Source-Terminals (51-1, 52-1) of the at least two semiconductor switching elements (51, 52) and/or the Gate-Terminals (51-3, 52-3) of the at least two semiconductor switching elements (51, 52) are electrically connected to the electronic circuit board (150).

15. The battery system (200) of claim 14, wherein the electrical connections of the Source-Terminals (51-1, 52-1) of the at least two semiconductor switching elements (51, 52) and/or of the Gate-Terminals (51-3, 52-3) of the at least two semiconductor switching elements (51, 52) to the electronic circuit board (150) are realized via bonding wires (30).
